# EUROPÄISCHE PATENTSCHRIFT

(11) **EP 1 099 366 B1**
(45) Veröffentlichungstag und Bekanntmachung des Hinweises auf die Patenterteilung: **02.02.2005**
(21) Anmeldenummer: 00123784.1
(22) Anmeldetag: 02.11.2000
(51) Int. Cl.: A01F 15/07

(54) **Hüllmittelzufuhrvorrichtung**
Supply device for wrapping material
Dispositif d'alimentation de gaine pour enrubannage

(30) Priorität: 12.11.1999 US 439935
(43) Veröffentlichungstag der Anmeldung: 16.05.2001
(73) Patentinhaber: DEERE & COMPANY, Moline, Illinois 61265-8098 (US)
(72) Erfinder: Viaud, Jean, 70100 Gray (FR); Anstey, Henry Dennis, Ottumwa, IA 51501 (US); Phillips, Kenneth Graig, Ottumwa, IA 52501 (US); Mass, Nissim, Haemek (IL); Lieber, Yuval, D.A. Megido (IL); Paz, Zvi, Haemek (IL)
(74) Vertreter: Magin, Ludwig Bernhard

(56) Entgegenhaltungen:
- EP-A- 0 807 380
- DE-A- 19 711 742
- GB-A- 2 326 870
- US-A- 5 289 672
- US-A- 5 974 764

## Beschreibung

Die Erfindung betrifft eine Hüllmittelzufuhrvorrichtung zur Aufnahme einer Hüllmittelrolle mit einem Druckarmzusammenbau und einer Reibfläche, zwischen denen die Hüllmittelrolle während des Betriebs angeordnet ist.

Aus der US-A-5,974,764 geht eine Rundballenpresse mit einer Netzbindevorrichtung hervor, die am rückwärtigen unteren Bereich eines Ballenauslaßgatters vorgesehen ist. Diese Netzbindevorrichtung weist Platz zur Aufnahme einer Netzrolle für den Betrieb und einer Vorratsnetzrolle auf. Die Betriebs-Netzrolle lagert während des Betriebs auf einer oberen Netzzufuhrrolle und wird mittels eines Spannarms auf dieser in Reibkontakt gehalten. Der Spannarm ist über einen Lenker mit einer Haube der Netzbindevorrichtung verbunden und wird von der Netzrolle abgehoben, wenn die Haube geöffnet wird. In diesem Zustand kann eine neue Netzrolle, insbesondere die Vorratsnetzrolle an der Stelle der nunmehr leeren Netzrolle positioniert werden. Zur Aufnahme oder Einführung der neuen Netzrolle werden zwei Arme über die Kontur der Haube hinaus nach hinten geschwenkt und bilden somit eine Rampe, auf der die Netzrolle aufgelegt werden kann.

Diese bereits bekannte Vorrichtung arbeitet zwar zuverlässig, ist aber weiteren Vereinfachungen zugänglich.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird ein Teil des Druckarmzusammenbaus gleichzeitig als eine Ladehilfe benutzt, wobei je nach seiner Ausgestaltung die unter Umständen schwere Hüllmittelrolle mittels des Armabschnitts zur Endstellung bewegt werden kann, was mit den bekannten, kurzen herausschwenkbaren Hebeln nicht möglich ist.

Die unterschiedliche Lagerung der Armabschnitte ober- bzw. unterhalb der Hüllmittelrolle, die schließlich zu einer gegensinnigen Schwenkbewegung beim Abnehmen des Durchmessers der Hüllmittelrolle führt, bewirkt, daß mittels eines Armabschnitts Kraft aufgebracht und mittels des anderen Armabschnitts diese Kraft stets in der richtigen Richtung, nämlich zu der Reibfläche hin, in die Hüllmittelrolle eingebracht werden kann.

Sich überlappende Armabschnitte erlauben auf einfache Weise eine Übertragung der Druckkraft, und der untere Armabschnitt nimmt aufgrund der Ladebewegung unmittelbar die richtige Lage auf der Hüllmittelrolle ein. Wenn eine Druckrolle vorgesehen ist, wird eine evtl. nicht erwünschte Reibung auf der Hüllmitteloberfläche vermieden.

Eine Teileeinsparung kann dadurch erreicht werden, daß ein Kraftspeicher, z. B. ein Gasdruckzylinder, einer Schraubenfeder, eine Torsionsfeder oder dergleichen, sowohl zum Verstellung oder zum Unterstützen deren Stellbewegung, als auch zur Beaufschlagung des oberen Armabschnitts herangezogen wird. Dadurch, daß die Druckkraft auf den oberen Armabschnitt wirkt, kann der untere Armabschnitt ohne entgegenwirkende Kraft in seine Lade- oder Betriebsstellung geschwenkt werden.

Die Aufnahme eines Teils der Hüllmittelrolle, die auf der anderen Seite an der Reibfläche anliegt, hat zum Ergebnis, daß die Hüllmittelrolle stets in ihrer Lage stabilisiert wird und bei Zug auf das Hüllmittel nicht von der Reibfläche weggezogen wird. Wenigstens eine der Rollen kann beim Laden der Hüllmittelrolle zugleich als Anschlag für die Hüllmittelrolle dienen, der verhindert, daß die auf den unteren Armabschnitt aufgesetzte Hüllmittelrolle zurückrollt und auf den Boden fällt.

Reibflächen, an denen die Hüllmittelrolle zur Anlage bringbar ist, um eine ausreichende Spannung während des Wickelvorgangs aufzubringen, die verhindert, daß die Netzrolle nach dem Abschneiden des Hüllmittels nachrollt, und die auch zu einem festen Anliegen des Hüllmittels an dem Ballen führt, können auf verschiedene Weise gebildet werden, z. B. durch Bremsrollen, durch bremsende Oberflächen an einer Wand oder dergleichen. Eine vorzügliche Möglichkeit, eine Reibung aufzubauen, ohne daß an einer bestimmten Stelle zu hohe Reibungswärme entsteht, besteht darin, daß die Hüllmittelrolle mit ihrem gesamten Gewicht auf einer der Hüllmittelzufuhrrolle lagert.

Eine derartige Anordnung des Kraftspeichers führt dazu, daß die Hüllmittelrolle stets mit im wesentlichen der gleichen Kraft gegen die Reibfläche gedrückt wird und so stets die gleiche Spannung in dem Hüllmittel herrscht.

Angesichts des Gewichts einer Hüllmittelrolle ist es von Vorteil, wenn der untere Armabschnitt von einem Tragteil abgestützt werden kann, wobei der Tragteil als Seil, Kabel, Strebe oder dergleichen ausgebildet sein kann. Wenn die Enden des unteren Armabschnitts im wesentlichen auf derselben Höhe liegen, wird eine Neigung und somit eine Rollbewegung in der einen oder anderen Richtung vermieden.

Eine sichere Lagerung der Hüllmittelrolle auf dem unteren Armabschnitt wird dadurch erreicht, daß diese in einer Mulde oder dergleichen aufgenommen wird, aus der sie selbst nicht entfallen kann.

Wenn der obere Armabschnitt mittels einer drehbaren Rolle auf einem glatten Bereich des unteren Armabschnitts abrollt, findet eine relativ reibungsfreie Kräfteübertragung statt, was zu einer hohen Effizienz des Druckarmzusammenbaus führt.

Die Druckrolle und die Anschlagrolle können sich der Lage der Hüllmittelrolle leicht anpassen, wenn sie von einem schwenkbeweglichen Halter getragen werden.

Die diametrale Anlage der Hüllmittelrolle an den beteiligten Rollen führt zu einer sicheren Lage der Hüllmittelrolle auch wenn auf das Hüllmittel ein beträchtlicher Zug ausgeübt wird.

In der Zeichnung ist ein nachfolgend näher beschriebenes Ausführungsbeispiel der Erfindung dargestellt. Es zeigt:
- Fig. 1: eine Presse mit einem Hüllmittelbindeapparat in Seitenansicht,
- Fig. 2: die Hüllmittelzufuhrvorrichtung in vergrößerter Darstellung in einer Seitenansicht von rechts und
- Fig. 3: einen Ausschnitt der Hüllmittelzufuhrvorrichtung mit einem Druckarm in vergrößerter Darstellung.

Vorab wird bemerkt, daß verschiedene Komponenten so beschrieben werden, als würden sie als Paar existieren, während nur eine gezeigt ist, und dies ist so zu verstehen, daß die fehlende Komponente im Aufbau gleich oder ähnlich ist mit der gezeigten. Des weiteren sind die Begriffe "rechts" und "links" in bezug auf den Blickpunkt einer Person gewählt, die hinter dem beschriebenen Gerät steht und in dessen Vorwärtsbewegungsrichtung schaut.

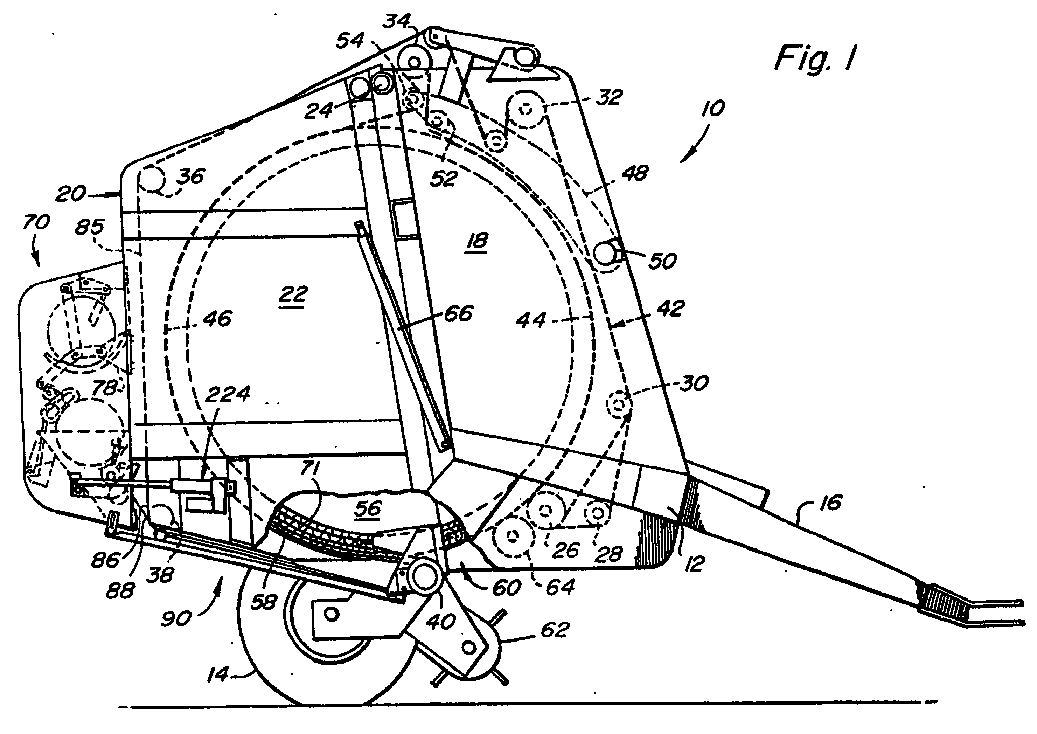

In Figur 1 ist eine Presse 10 des Typs gezeigt, mit dem große zylindrische Ballen hergestellt werden und der gewöhnlich als große Rundballenpresse bezeichnet wird. Die Presse 10 enthält einen Hauptrahmen 12, der sich auf einem Paar Räder 14 abstützt. Der Hauptrahmen 12 besitzt eine Deichsel 16, die an ihn angeschlossen und so ausgebildet ist, daß sie zum Ziehen an ein nicht gezeigtes Zugfahrzeug, z. B. einen Ackerschlepper, angeschlossen werden kann. Ein Paar vertikaler Seitenwände 18, die in der Querrichtung einen Abstand zueinander aufweisen, sind mit dem Hauptrahmen 12 verbunden und weisen entsprechende aufrechte rückwärtige Enden auf. Ein Ballenauslaßgatter 20 mit sich gegenüberliegenden Seitenwänden 22 ist an der Stelle 24 vertikal schwenkbar an obere rückwärtige Stellen der Seitenwände 18 angeschlossen, wobei die Seitenwände 22 aufrechte vordere Enden aufweisen, die an den rückwärtigen Enden der Seitenwände 18 anliegen, wenn sich das Ballenauslaßgatter 20 in seiner gezeigten unteren geschlossenen Stellung befindet.

Eine Vielzahl von Rollen, auf denen Riemen zum Bilden von Ballen aufliegen und deren gegenüberliegende Enden drehbar in nicht gezeigten Lagern von den Seitenwänden 18, 22 getragen werden, ist im Umfang der Seitenwände 18 und 22 angeordnet und erstreckt sich zwischen diesen. Im einzelnen sind beginnend an einer unteren mittigen Stelle und entgegen dem Uhrzeigerdrehsinn zu einer oberen rückwärtigen Stelle der Seitenwände 18 verlaufend, eine angetriebene Rolle 26, eine untere vordere Rolle 28, eine vordere dazwischen gelegene Rolle 30, eine obere vordere Rolle 32 und eine obere rückwärtige Rolle 34 vorgesehen. Fährt man von einer oberen rückwärtigen Stelle der Seitenwände 22 des Ballenauslaßgatters 20 aus entgegen der Uhrzeigerdrehrichtung fort, dann ist dort eine obere rückwärtige Rolle 36, eine untere rückwärtige Rolle 38 und eine untere vordere Rolle 40 vorgesehen. Zwischen den Paaren Seitenwände 18, 22 und nebeneinander auf den verschiedenen Rollen 24, 26, 28, 32 bis 40 abgestützt befindet sich eine Vielzahl endloser Riemen 42 zum Bilden von Ballen. Mit der Ausnahme einiger der Riemen 42, die die untere vordere Rolle 28 überspringen, sind die Riemen 42 derart angeordnet, daß sie nacheinander mit den Rollen 26, 28, 30, 32, 36, 38, 40 und 34 in Eingriff geraten. Ein vorderes Trum 44 der Riemen 42 erstreckt sich von der angetriebenen Rolle 26 aufwärts zu der Rolle 34. In gleicher Weise erstreckt sich ein rückwärtiges Trum 46 der Riemen 42 von der vorderen unteren Rolle 40 in dem Ballenauslaßgatter 20 aufwärts zu der Rolle 34. Vordere und rückwärtige Umlenkrollen 52, 54 mit einem geringen Abstand zwischen sich sind zwischen den rückwärtigen Endbereichen eines Paars sich nach hinten erstreckender Spannarme 48, die an der Stelle 50 in halber Höhe an der Vorderseite der Seitenwände 18 vertikal schwenkbar angebracht sind, angeordnet, wobei die Trume 44 und 46 mit den Seitenwänden 18 und 22 zusammenwirken, um eine ausdehnbare Preß- oder Ballenbildungskammer 56 zu definieren, die an ihrer Oberseite von den Umlenkrollen 52, 54 geschlossen wird, und die hier in dem Zustand einer beträchtlichen Ausdehnung und mit einem Ballen 58 gezeigt ist. Wenn die Ballenbildungskammer 56 leer ist, konvergieren die Trume 44 bzw. 46 von der angetriebenen Rolle 26 und der vorderen Rolle 40 in dem Ballenauslaßgatter 20 aus nach oben und verlaufen nahe aneinander zwischen den Umlenkrollen 52, 54, wobei das Trum 44 eine rückwärtige Oberfläche der vorderen Umlenkrolle 52 und das Trum 46 die vordere Oberfläche der rückwärtigen Umlenkrolle 54 berührt, so daß die Ballenbildungskammer 20 von der Seite gesehen eine Keilform einnimmt. Der Bodenbereich der Ballenbildungskammer 56 ist mit einem Guteinlaß 60 versehen, der sich zwischen der angetriebenen Rolle 26 und der unteren vorderen Rolle 40 in dem Ballenauslaßgatter 20 erstreckt. Erntegut wird mittels einer Pick-up 62 in den Guteinlaß 60 eingespeist, damit es zu einem Ballen, z. B. dem Ballen 58, aufgerollt wird, und zwar infolge der Wirkung der vorderen und rückwärtigen Trume 44 und 46, die jeweils so angetrieben werden, daß sie sich zu dem Guteinlaß 60 hin- bzw. von diesem wegbewegen, wie anfänglich auch der einer Starterrolle 64, die in den Seitenwänden 18 drehbar aufgenommen ist, und zwar nahe zu der angetriebenen Rolle 26 und in derselben Richtung wie diese angetrieben, so daß sie derart funktioniert, daß sie Erntegut, das von dem vorderen Trum 44 nach unten mitgenommen wird, abstreift. Während der Ballen 58 gebildet wird, vergrößert sich die Ballenbildungskammer 56 zunehmend bis zu einer vorbestimmten Größe, wie dies dargestellt ist, gegen die Kraft, die in den Riemen 42 von einem Spannsystem aufgebaut wird, das das Paar Spannarme 48 zusammen mit einem Paar nicht gezeigter Spannfedern und einem Paar nicht gezeigter Hydraulikzylinder umfaßt, die zwischen die Seitenwände 18 und die Spannarme 48 eingefügt sind, um sich der Aufwärtsbewegung der Spannarme 48 zu widersetzen, wie dies wohl bekannt ist. Ein Paar von Hydraulikzylindern 66 für das Ballenentladegatter 20 ist vorgesehen, um das Ballenentladegatter 20 um die Stelle 24 in eine offene Stellung nach oben zu schwenken, wenn es gewünscht ist, den Ballen 58 auf den Boden zu entladen.

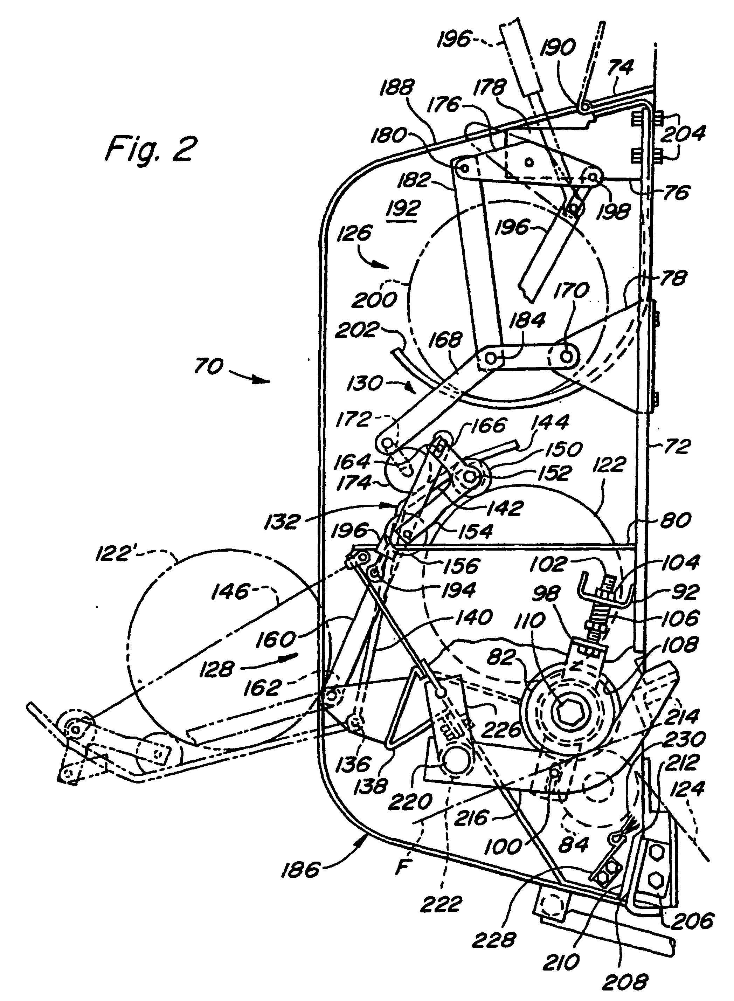

In Figur 2 ist eine Hüllmittelzufuhrvorrichtung 70 gezeigt, der an den unteren rückwärtigen Bereich des Ballenentladegatters 20 angeschlossen ist, um Ballen 58, die in der Ballenbildungskammer 56 gebildet werden, vor der Ablage auf dem Boden zu umwickeln. Es wird bemerkt, daß die Hüllmittelzufuhrvorrichtung 70 so ausgebildet ist, daß sie eine Hüllmittelbahn abgibt, deren Breite größer ist als die der Ballenbildungskammer 56, um in einer solchen nicht näher beschriebenen Weise in die Ballenbildungskammer 56 eingeführt zu werden, daß die Hüllmittelbahn über die Endkanten des Ballens 58 gewickelt wird, wie dies an der Stelle 71 in Figur 1 gezeigt ist. Im einzelnen enthält die Hüllmittelzufuhrvorrichtung 70 einen Tragrahmen, die an die rückwärtige untere Hälfte des Ballenentladegatters 20 montiert ist und eine vertikale Wand 72 enthält, die sich quer zwischen vertikalen Flanschen erstreckt und an diesen befestigt ist, die rückwärtige Enden der sich gegenüberliegenden Seitenwände 22 des Ballenauslaßgatters 22 bilden. Die Wand 72 besitzt ein oberes Ende, das von einem sich nach unten und hinten erstreckenden Flansch 74 gebildet wird. Quer verlaufende Schenkel eines Paares von Haltern 76 zum Tragen von Hebeln und als Winkel ausgebildet, sind an obere rechte und linke Bereiche der Wand 72 unterhalb des Flansches 74 angeschraubt. Ein Paar ebenfalls als Winkel ausgebildete Halter 78 für Spannarme ist mit einem Abstand vertikal unterhalb des Paars Halter 76 vorgesehen, und sie besitzen quer verlaufende Schenkel, die an die Wand 72 angeschraubt sind. Der tragende Aufbau der Hüllmittelzufuhrvorrichtung 70 enthält ferner ein Paar sich längs erstreckender vertikaler Tragwände 80, die von der Seite betrachtet ungefähr eine dreiecksförmige Form einnehmen, und vordere vertikale Seiten, die von quer verlaufenden Flanschen definiert werden, die einen unteren Teil der Wand 72 überlappen und an den Aufbau an dem Ende des Ballenentladegatters 20 z. B. mittels nicht gezeigter geschraubter Befestiger gesichert sind, um so in der Querrichtung einen Abstand zueinander aufzuweisen, der größer ist, als der Abstand zwischen den Seitenwänden 22 des Ballenentladegatters 20, d. h. größer als die Breite der Ballenbildungskammer 56.

Obere und untere Hüllmittelzufuhrrollen 82, 84 erstrecken sich zwischen Tragwänden 80 und werden mit ihren Enden in von diesen getragenen Lagern drehbar gehalten, wobei sich die Drehachse der Hüllmittelzufuhrrolle 82 oberhalb und rückwärtig der Hüllmittelzufuhrrolle 84 befindet, so daß eine ebene Hüllmittelflugbahn F an dem Spalt zwischen und tangential zu den Hüllmittelzufuhrrollen 82, 84 verläuft und sich von dem Spalt aus nach oben und vorne und unter die Wand 72 erstreckt. Wiederum mit Bezug auf Figur 1 ist zu erkennen, daß die Flugbahn F ein vertikales Trum 85 der Riemen 42 schneiden würde, das sich zwischen der oberen und der unteren Rolle 36 bzw. 38 erstreckt, und zwar an einem Spalt 86, der von einem Abschnitt 88 einer Wanne zum Führen des Hüllmittels, die einen Teil eines Hüllmittelführungszusammenbaus 90 darstellt, und einem Bereich der Riemen 42 gebildet wird, der in Eingriff mit der unteren rückwärtigen Rolle 38 steht.

Die obere Hüllmittelzufuhrrolle 82 ist vorzugsweise aus einem Metallkern gebildet, der mit einem Gummi oder dergleichen mit hoher Reibung versehen ist. Die Hüllmittelzufuhrrolle 82 ist derart angeordnet, daß sie gegen die untere Hüllmittelzufuhrrolle 84 vorgespannt ist, so daß letztere infolge eines Reibschlusses mit der ersten angetrieben wird. Im einzelnen ist ein U-förmiger und sich quer erstreckender Halter 92 auf die äußere Oberfläche jeder der Wände 80 geschweißt. Ein Wellenhalter 98 mit einem Längsschlitz, in dem ein an der nahegelegenen Tragwand 80 befestigter Führungsbolzen 100 aufgenommen wird, befindet sich unterhalb der Halter 92 mit einem nach außen gewandten oberen Endbereich, der sich parallel zu dem Halter 92 erstreckt. Ein Paar Schrauben 102 erstreckt sich jeweils durch das Paar nach außen gewendeter Endbereiche der Wellenhalter 98 und durch die angrenzenden Halter 92, und jede Schraube 102 wird mittels einer Mutter 104, die in deren mit Gewinde versehenen oberen Endbereich aufgenommen ist, in einer eingestellten Stellung gehalten. Eine Schraubenfeder 106 ist auf jeder Schraube 102 angeordnet und zwischen den jeweils einander zugeordneten Halter 92 und Wellenhalter 98 eingespannt. Ein Rollenhalterbolzen 110, der dazu dient, die Hüllmittelzufuhrrolle 82 in einem von dem Wellenhalter 98 getragenen Lager zu halten, erstreckt sich durch eine kreisförmige Öffnung 108 mit Spiel in der angrenzenden Tragwand 80, wobei von den jeweiligen Schlitzen in dem unteren Bereich der Wellenhalter 98 eine Bewegung der Hüllmittelzufuhrrolle 82 zu der unteren Hüllmittelzufuhrrolle 84 hin und von dieser weg zugelassen wird. Ein wahlweise einrückbares Riemen-Riemenscheibegetriebe, mit dem die obere Hüllmittelzufuhrrolle 82 infolge der Drehung der unteren rückwärtigen Rolle 38 für die Riemen 42 gedreht werden kann, ist nicht gezeigt.

Eine betriebsbereite Hüllmittelrolle 122 zum Abgeben von Hüllmittel ist in einer Lage gezeigt, in der sie sich in Berührung mit der angetriebenen oberen Hüllmittelzufuhrrolle 82 befindet. Ein Streifen von Hüllmittel 124 erstreckt sich von einer unteren vorderen Stelle der Hüllmittelrolle 122 über die rückwärtige Hälfte der oberen Hüllmittelzufuhrrolle 82 und dann durch den Spalt zwischen den Hüllmittelzufuhrrollen 82, 84. Gemäß Figur 2 verläuft die Bahn des Hüllmittels 124 von den Hüllmittelzufuhrrollen 82, 84 aus weiter und ist so gelegen, wie es der Fall wäre, wenn ein Ballen 58 gewickelt wird, d. h. sie kommt in Anlage mit einem Teil eines oberen vorderen Quadranten der unteren Hüllmittelzufuhrrolle 84 und erstreckt sich in den Spalt 86, der von den Riemen 42 und dem Abschnitt 88 des Hüllmittelführungszusammenbaus 90 gebildet wird.

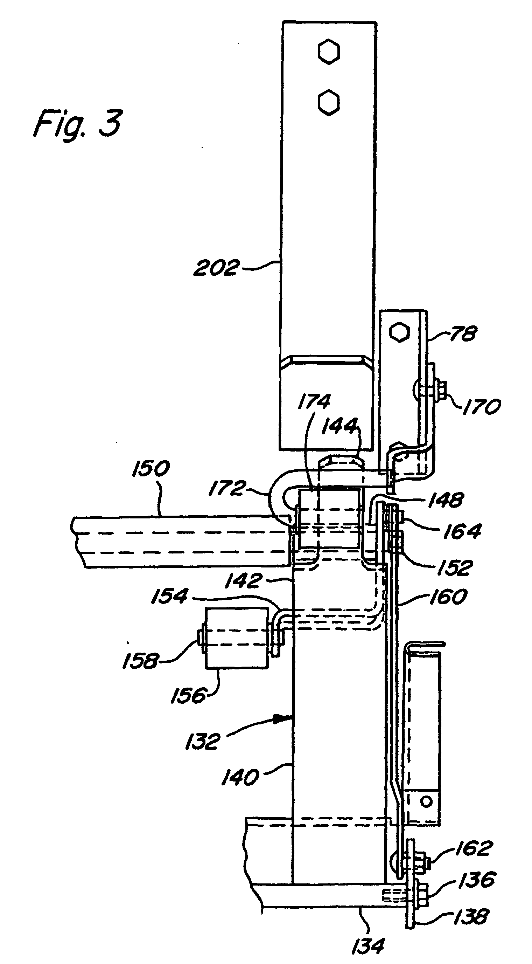

In Figur 3 ist ein Druckarmzusammenbau 126 zum Aufbringen einer annähernd konstanten Kraft auf die Hüllmittelrolle 122 gezeigt, um diese gegen die obere Hüllmittelzufuhrrolle 82 zu drücken, um einen gewünschten Reibwiderstand gegenüber der Kraft aufzubauen, die während der Umwicklung des Ballens 58 dazu tendiert, das Hüllmittel 124 zu ziehen. Im einzelnen enthält der Druckarmzusammenbau 126 getrennte untere und obere Armabschnitte 128 bzw. 130. Der untere Armabschnitt 128 enthält ein Paar Armbereiche 132, die in der Querrichtung einen Abstand zueinander aufweisen und deren erste Endbereiche an eine querverlaufende Stange 134 angeschweißt sind, wobei die Armbereiche 132 für eine vertikale Schwenkbewegung um eine horizontale, quer verlaufende Schwenkachse montiert sind, die von jeweiligen Bolzen 136 definiert wird, die die gegenüberliegenden Enden der Stange 134 an entsprechende Halter 138 anschließen, die an die rückwärtigen Seiten der Tragwände 80 auf einer Höhe angebracht sind, die ungefähr der der Drehachse der oberen Hüllmittelzufuhrrolle 82 entspricht. Die Armbereiche 132 sind aus geformten Streifen oder schmalen Platten gebildet, die in bezug auf die Stange 134 ein hauptsächliches, gerades inneres Segment 140, ein dazwischen gelegenes Segment 142 und ein relativ kurzes endseitiges Segment 144 enthalten, wobei das dazwischen gelegene Segment 142 mit dem geraden Segment 140 einen Winkel von ca. 138 Grad einschließt, und das endseitige Segment 144 mit dem dazwischen gelegenen Segment 142 einen Winkel von ungefähr 165 Grad bildet. Wenn also die Armbereiche 132 in eine sich nach hinten erstreckende Ladestellung geschwenkt werden, in der sich die geraden Segmente 140 ungefähr waagrecht befinden, ist ein Ausleger zum Tragen einer neuen Hüllmittelrolle 122' gebildet, wie sie in Figur 2 in gestrichelten Linien dargestellt ist. Wenn sich die Hüllmittelrolle 122' in ihrer Ladestellung befindet, kann eine Bahn von Hüllmittel 124 in einer nachfolgend beschriebenen Weise leicht von der Hüllmittelrolle 122' gezogen und manuell durch den Spalt zwischen den Hüllmittelzufuhrrollen 82, 84 geführt werden. Es wird hier darauf hingewiesen, daß sich zwischen dem oberen rückwärtigen Eckbereich jeder Tragwand 80 und dem zugeordneten Armbereich 132 ein nachgiebiges Tragteil 146, das hier als ein Kabel oder Seil gezeigt ist aber als irgendein passendes flexibles Teil, z.B. als Kette, ausgebildet sein kann, erstreckt, wobei, wenn der Tragteil 146 gespannt wird, er eine Stütze für die unteren Armbereiche 132 bildet, wenn diese sich in ihrer unteren Ladestellung befinden.

Eine rohrförmige Hülse 148 (Figur 3) ist in der Nähe der Verbindung des dazwischen gelegenen Segments 142 und des endseitigen Segments 144 an den Armbereich 132 angeschweißt. Eine Druckrolle 150 erstreckt sich zwischen den Hülsen 148 und ist in diesen mittels entsprechender Lager, die eine Befestigungsschraube 152 einschließen, drehbar gelagert, wobei die Befestigungsschrauben 152 auch als ein Anschluß für den betreffenden Tragteil 146 dienen. Die Druckrolle 150 berührt den Umfang der Hüllmittelrolle 122 an einer Stelle, die ungefähr diametral gegenüber dem Berührungsbereich der Rolle 122 mit der oberen Hüllmittelzufuhrrolle 82 liegt.

Jede Befestigungsschraube 152 dient zugleich der schwenkbaren Aufnahme eines Halters 154 einer Anschlagrolle 156. Von der Seite gesehen und wenn der Armbereich 132 im wesentlichen aufrecht verläuft, nimmt jeder Halter 154 eine umgekehrte L-förmige Gestalt ein, wobei ausgehend von der Befestigungsschraube 152 der kurze Schenkel des "L" nach oben und hinten und der lange Schenkel des "L" nach unten und hinten ausgerichtet ist. Die Halter 154 haben jeweils nach innen versetzte untere Bereiche, die sich unterhalb eines betreffenden Armbereichs 132 erstrecken und in einen nach unten gebogenen Ende auslaufen, an das mittels eines nach innen vorstehenden Bolzens 158 eine Rückhalte- oder Anschlagrolle 156 angebracht ist. Die Anschlagrolle 156 ist so angeordnet, daß sie sich mit der Hüllmittelrolle 122 in Anlage oder sich zumindest in deren unmittelbarer Nähe befinden kann, wenn die Armbereiche 132 nach unten schwenken, wenn die Hüllmittelrolle 122 benutzt wird, so daß letztere davon abgehalten wird, aus ihrer gewünschten Stellung in Anlage mit der oberen Hüllmittelzufuhrrolle 82 bewegt zu werden, wenn sie anfänglich mit deren Antrieb in Kontakt gerät. Ein Führungslenker 160, der mit dem entsprechend zugeordneten Armbereich 132 und dem Halter 154 zusammenwirkt, um einen Viergelenkmechanismus zu bilden, ist jeder Anschlagrolle 156 zu dem Zweck zugeordnet, sicherzustellen, daß die Anschlagrolle 156 in einer korrekten Haltung bleibt, um die Hüllmittelrolle 122 aufzunehmen. Im einzelnen weist jeder Führungslenker 160 ein Ende auf, das bei der Schraube 162 an einen der Halter 138 angeschlossen ist, und ein anderes Ende, das bei dem Bolzen 164 an den kurzen Schenkel des betreffenden Halters 154 angeschlossen ist. Damit der Halter 154 Spiel hat, um nicht mit der Hüllmittelrolle 122 in Konflikt zu geraten, wenn deren Durchmesser relativ klein wird, wenn sich die Hüllmittelrolle 122 während des Gebrauchs aufzehrt, ist der Führungslenker 160 mit einem länglichen Loch oder Schlitz 166 versehen, der den Bolzen 164 aufnimmt. Es ist ersichtlich, daß die Schwenkstellen, die von den Bolzen 136 und den Schrauben 162 gebildet werden, ungefähr parallel zueinander sind und ungefähr den gleichen Abstand zueinander aufweisen, wie die Schwenkstellen, die durch die Befestigungsschrauben 152 und die Bolzen 164 gebildet werden. Aus diesem Grund handelt es sich bei dem Viergelenkmechanismus nahezu um ein Parallelogrammgestänge, so daß die Halter 154 ungefähr in der gleichen Stellung bleiben, wenn das Gestänge zwischen den gegenüberliegenden Extremen seiner Bewegung schwenkt, die dem Zustand entsprechen, wenn eine gefüllte und wenn eine aufgezehrte Hüllmittelrolle 122 vorliegt.

Der obere Armabschnitt 130 enthält ein Paar in Querrichtung beabstandeter oberer Armbereiche 168, die mittels Schrauben 170 jeweils vertikal schwenkbar an das Paar Halter 78 angeschlossen sind. Ein Ende des Körpers einer J-förmigen Stange 172 ist an eine innere Oberfläche an dem freien Ende jedes Armbereichs 168 angeschweißt und an jeden der einen Haken bildenden Teile des J ist eine Druckrolle 174 drehbar montiert, wobei die Druckrollen 174 jeweils in Berührung mit den dazwischen gelegenen Segmenten 142 des unteren Armbereichs 132 gelangen, wenn sich der Druckarmzusammenbau 126 in seinem Arbeitszustand befindet, wie dies in ausgezogenen Linien in Figur 2 gezeigt ist. Die Geometrie der unteren und der oberen Armabschnitte 128 bzw. 130 ist derart gewählt, daß dann, wenn das Gewicht der Hüllmittelrolle 122 abnimmt, die Kraft, die die Hüllmittelrolle 122 gegen die Hüllmittelzufuhrrolle 82 drückt, in einem derartigen Maß ansteigt, daß die Kraft an der Kontaktstelle der Hüllmittelrolle 122 und der Hüllmittelzufuhrrolle 82 im wesentlichen konstant bleibt, so daß dadurch eine im wesentlichen konstante Spannung in dem Hüllmittel 124 erhalten bleibt, wenn dieses um einen sich in der Ballenbildungskammer 56 befindlichen Ballen 58 gewickelt wird. Daher wirkt der Druckarmzusammenbau 126 zum Aufbau einer ausreichenden Kraft, um einen merklichen Schlupf zwischen der Hüllmittelrolle 122 und der Hüllmittelzufuhrrolle 82 zu vermeiden.

Ein Hebel- und Gestängezusammenbau bildet einen Teil eines Kraftmechanismus zum Nach-Unten-Drücken der Armbereiche 168, so daß die Druckrollen 174 nach unten gegen die dazwischen gelegenen Segmente 142 gedrängt werden. Im einzelnen ist ein sich längs erstreckender Hebel 176 mittels eines Bolzens 178, der sich auf halbem Weg zwischen gegenüberliegenden Enden des Hebels 176 befindet, schwenkbar an jeden Halter 76 angebracht. Das obere Ende eines Kraftübertragungslenkers 182 ist an das rückwärtige Ende jedes Hebels 176, etwa mittels eines Bolzens 180, angeschlossen, und dessen unteres Ende ist, etwa mittels eines Stifts 184, an den zugelegenen oberen Armbereich 168 angeschlossen, und zwar an einer Stelle, die von der Schraube 170 ungefähr ein Drittel der Entfernung zwischen der Schraube 170 und der Druckrolle 174 beabstandet ist. Ein Gehäuse oder eine Bedeckung 186 besitzt eine obere Wand 188, die bei der Stelle 190 an einen quer verlaufenden Teil jedes Halters 76 angelenkt ist, und parallel zu dem nach hinten gewundenen Flansch 74 der Wand 72 angeordnet ist. Die Bedeckung 186 besitzt sich gegenüberliegende Seitenwände 192, und mittels jeweils eines Bolzens 194 ist an die Innenseite jeder Seitenwand 192 das Zylinderende eines als Gaszylinder ausgebildeten Kraftspeichers 196 angeschlossen, dessen kolbenstangenseitiges Ende mittels eines Bolzens 198 an den vorderen Endbereich des benachbarten Hebels 176 angeschlossen ist. Der Bolzen 194 befindet sich an einer Stelle, die sich seitlich des oberen rückwärtigen Eckbereichs der benachbarten Tragwand 80 befindet, wenn man davon ausgeht, daß die Bedeckung 186 geschlossen ist, wie dies mit durchgezogenen Linien in Figur 2 gezeigt ist. Wenn sich die Bedeckung 186 in seiner geschlossenen Stellung befindet, üben die Kraftspeicher 196 eine Kraft aus, die dazu tendiert, die Bedeckung 186 in seiner geschlossenen Stellung zu halten, und gleichzeitig wirken sie so, daß sie eine Kraft entwickeln, die mittels der Hebel 176 und der Kraftübertragungslenker 182 auf die oberen Armbereiche 168 übertragen wird, was zur Folge hat, daß die Druckrollen 174 durch die Armbereiche 132 wirken, um die Druckrolle 150 gegen die Hüllmittelrolle 122 zu drücken. Wenn die Bedeckung 186 manuell in seine geöffnete Stellung angehoben wird, wirken die Kraftspeicher 196 derart, daß sie die Bedeckung 186 in seiner offenen Stellung halten und gleichzeitig die oberen Armbereiche 168 aus dem Weg heben, um so das Absenken der unteren Armbereiche 128 in die Ladestellung zu ermöglichen, wenn dies gewünscht wird. Eine Hüllmittelersatzrolle 200 wird von einem Ersatzrollenträger getragen, der ein Paar einen Querabstand zueinander aufweisender J-förmiger Rollenträger 202 enthält, die aus Streifen gebildet sind, deren obere Endbereiche jeweils an der Stelle 204 an das Paar Halter 76 angeschraubt sind.

An einen unteren Bereich des Ballenentladegatters 20 unmittelbar unterhalb und vor der unteren Hüllmittelzufuhrrolle 84 befindet sich ein winkelförmiger Messerstützhalter 206, der eine nahe gelegene vertikale Messerbefestigungsoberfläche 208 definiert, die sich quer zwischen den Tragwänden 80 erstreckt. Ein Messer 210 mit einem abgeschrägten oberen Ende, das eine Schneidkante 212 bildet, ist an die Messerbefestigungsoberfläche 208 angebracht. Ein Amboß 214 ist aus einem Stück Winkelstahl gebildet und erstreckt sich in paralleler Beziehung zu der Schneidkante 212 und bildet einen Teil eines Abschneidearmzusammenbaus, um wahlweise von einer Wartestellung, in der er wie in Figur 2 gezeigt über die Schneidkante 212 angehoben ist, in eine Schneidstellung bewegt wird, in der einer der Schenkel des Winkelstahls die abgeschrägte Oberfläche berührt, die zu der Schneidkante 212 führt. Im einzelnen enthält der Schneidarmzusammenbau rechte und linke sich längs erstreckende einen Querabstand zueinander aufweisende Arme 216, deren vordere Enden durch den Amboß 214 miteinander verbunden sind. Die Arme 216 sind an ihren rückwärtigen Enden mittels einer Schwenkwelle 220 untereinander verbunden, die zum Schwenken in einem Paar zylindrischer Hülsen aufgenommen ist, die jeweils Teile eines Paars von Befestigungsaufbauten 222 bilden, die jeweils an den rückwärtigen Seiten der Tragwände 80 befestigt sind. Wie dies in Figur 1 zu sehen ist, ist ein elektrisch angetriebener umkehrbarer linearer Motor 224 an die rechte Seitenwand 22 des Ballenentladegatters 20 montiert und weist eine Ausgangswelle auf, die an einen Hebelarm 226 angeschlossen ist, der wiederum an dem äußeren Ende der Schwenkwelle 220 befestigt ist. Die Ausgangswelle des Motors 224 befindet sich in einem ausgefahrenen Zustand, wenn sich der Amboß in seiner angehobenen Wartestellung befindet. Nachdem der Ballen 58 in einer zu beschreibenden Weise mit Hüllmittel 124 umwickelt ist, wird der Motor 224 so beaufschlagt, daß er die Ausgangswelle zurückzieht. Dies führt dazu, daß der Armzusammenbau 216, 220, 226 mit Blick auf Figur 2 im Uhrzeigerdrehsinn geschwenkt wird, was darin resultiert, daß sich der Amboß 214 in seine untere Schneidstellung bewegt und auf seinem Weg die Bahn des Hüllmittels 124 berührt und sie nach unten in Berührung mit der Schneidkante 212 bringt, wo sie abgeschnitten wird.

Zwischen der unteren Hüllmittelzufuhrrolle 84 und der Schneidkante 212 befindet sich eine Bürste 228 mit Borsten 230, die sich zu der Hüllmittelzufuhrrolle 84 ausdehnen und dieser benachbart sind, und die abgeschrägte Oberfläche des Messers 210, die zu der Schneidkante 212 führt. Die Bürste 228 erfüllt zwei Funktionen. Eine Funktion besteht darin, als ein Abstreifer zu wirken, der verhindert, daß am Anfang des Wickelzyklus eine Bahn des Hüllmittels 124 um die Hüllmittelzufuhrrolle 84 gewickelt wird, und die andere Funktion besteht darin, die Bahn des Hüllmittels 124 aufzunehmen, wenn diese unter der Wirkung des Ambosses 214, der gegen das Messer 210 arbeitet, abgeschnitten wird. Der Zweck der Aufnahme bzw. der Verstrickung mit dem Hüllmittel 124 besteht darin, daß dieses am Anfang des Wickelzyklus auf sich selbst zurückgefaltet wird, was zu einer doppelten Lage von Hüllmittel 124 führt, die zu dem Spalt 86 führt, bevor das eingeklemmte Ende lose und herausgezogen wird. Dieses Umschlagen an dem vorlaufenden Ende der Bahn des Hüllmittels 124 liefert eine Kante, die frei ist von herabhängenden Fasern, die um Spreizvorrichtungen auf den Rollen 38, 40 gewickelt werden könnten.

Der Druckarmzusammenbau 126 in dem vorliegenden Ausführungsbeispiel arbeitet in der folgenden Weise. Wenn die Bedeckung 186 der Hüllmittelzufuhrvorrichtung 70 geschlossen ist, wie man dies an den durchgezogenen Linien in Figur 2 sieht, befindet sich der untere Armabschnitt 128 in seiner Arbeitsstellung, in der sich die Druckrolle 150 in Anlage mit dem oberen rückwärtigen Quadranten der vollen Hüllmittelrolle 122 befindet. Der obere Armabschnitt 130 befindet sich in seiner abgesenkten Stellung, in der sich die Druckrollen 174 jeweils in Eingriff bzw. in Anlage an dem dazwischen gelegenen Segment 142 der unteren Armabschnitte 132 befinden. Die Kraftspeicher 196 werden dann mittels der Hebel 176 und der Kraftübertragungslenker 182 eine Vorspannung ausüben, um die oberen Armbereiche 168 nach unten zu drängen, so daß die Druckrollen 174 gegen die unteren Armbereiche 132 drücken. Die Kraft, die von den Druckrollen 174 den unteren Armbereichen 132 aufgelegt wird, hat als Ergebnis, daß die Druckrolle 150 gegen den oberen rückwärtigen Quadranten der Hüllmittelrolle 122 gedrückt wird, wodurch letztere in Anlage mit der angetriebenen Hüllmittelzufuhrrolle 82 gedrängt wird. Wenn Hüllmittel 124 von der Hüllmittelrolle 122 abgezogen wird, wird sich deren Durchmesser verringern mit dem Ergebnis, daß die unteren Armabschnitte 132 gemäß Figur 2 im Uhrzeigerdrehsinn schwenken werden, und die oberen Armabschnitte 168 werden dem folgen und entgegen dem Uhrzeigerdrehsinn schwenken. Die geometrische Beziehung zwischen den Armabschnitten 128 und 130 und den Kraftübertragungslenkern 182 sind derart, daß dann, wenn Hüllmittel 124 von der Hüllmittelrolle 122 abgezogen wird, die Gewichtsabnahme aufgrund des Verbrauchs von der zunehmenden Kraft kompensiert wird, die von der Druckrolle 150 ausgeübt wird, wobei diese Wirkung sicherstellt, daß der Widerstand des Hüllmittels 124, das von der Hüllmittelrolle 122 abgezogen wird, im wesentlichen konstant bleibt, so daß die gewünschte Streckung des Hüllmittels 124 im wesentlichen konstant gehalten wird. Die Kraft, die auf die Hüllmittelrolle 122 ausgeübt wird, reicht aus, um einen bemerkenswerten Schlupf zwischen der Hüllmittelrolle 122 und der angetriebenen Hüllmittelzufuhrrolle 82 zu verhindern.

Während all dieser Zeit schwenken die unteren Armbereiche 132 im Uhrzeigerdrehsinn während das Hüllmittel 124 von der Hüllmittelrolle 122 benutzt wird, und die Führungslenker 160 und die kurzen Schenkel der Halter 154 wirken mit den unteren Armbereichen 132 als ein Viergelenkmechanismus zusammen, der die Anschlagrollen 156 in unmittelbarer Nähe oder allenfalls in leichter Anlage an einer Umfangsstelle der Hüllmittelrolle 122 hält, die sich unterhalb rückwärtig der Druckrolle 150 befindet, so daß die Anschlagrollen 156 stets vorzüglich gelegen sind, um zu verhindern, daß die Hüllmittelrolle 122 nach ihrer anfänglichen Begegnung mit dem Antrieb der Hüllmittelzufuhrrolle 82 aus ihrer gewünschten Stellung auf der Hüllmittelzufuhrrolle 82 bewegt wird.

## Patentansprüche

1. Hüllmittelzufuhrvorrichtung (70) zur Aufnahme einer Hüllmittelrolle (122) mit einem Druckarmzusammenbau (126) und einer Reibfläche, zwischen denen die Hüllmittelrolle (122) während des Betriebs angeordnet ist, **dadurch gekennzeichnet, daß** der Druckarmzusammenbau (126) einen unteren und einen oberen Armabschnitt (128, 130) aufweist, die in einer Betriebsstellung gemeinsam auf die Hüllmittelrolle (122) einwirken und in einer Außerbetriebsstellung in voneinander getrennte Stellungen bringbar sind, in der sie einen Abstand zueinander aufweisen, der wenigstens den Durchtritt der Hüllmittelrolle (122) zuläßt.

2. Hüllmittelzufuhrvorrichtung nach Anspruch 1, **dadurch gekennzeichnet, daß** der untere Armabschnitt (128) unterhalb und der obere Armabschnitt oberhalb der Hüllmittelrolle (122) schwenkbar angebracht ist.

3. Hüllmittelzufuhrvorrichtung nach Anspruch 1 oder 2, **dadurch gekennzeichnet, daß** sich in der Betriebsstellung der untere und der obere Armabschnitt (128, 130) überlappen und der untere Armabschnitt (128), vorzugsweise mittels einer Druckrolle (150), auf der Hüllmittelrolle (122) aufliegt.

4. Hüllmittelzufuhrvorrichtung nach einem oder mehreren der vorherigen Ansprüche, **dadurch gekennzeichnet, daß** die zum ausüben eines Druckes auf die Hüllmittelrolle (122) erforderliche Kraft auf den oberen Armabschnitt eingeleitet wird und die Kraft von einem Kraftspeicher (196) geliefert wird, der auch der Verstellung einer Bedeckung (186) der Hüllmittelzufuhrvorrichtung (70) dient.

5. Hüllmittelzufuhrvorrichtung nach einem oder mehreren der vorherigen Ansprüche, **dadurch gekennzeichnet, daß** der untere Armabschnitt (128) eine Druckrolle (150) und eine Anschlagrolle (156) aufweist, die einen radialen Abstand zueinander aufweisen, in den ein Teil des Umfangsbogens der Hüllmittelrolle aufgenommen werden kann.

6. Hüllmittelzufuhrvorrichtung nach einem oder mehreren der vorherigen Ansprüche, **dadurch gekennzeichnet, daß** das Hüllmittel (124) mittels zweier gegensinnig drehbarer Hüllmittelzufuhrrollen (82, 84) von der Hüllmittelrolle (122) abziehbar ist und eine der Hüllmittelzufuhrrollen (82), insbesondere eine obere, die Reibfläche darbietet, gegen die die Hüllmittelrolle (122) zur Anlage bringbar ist.

7. Hüllmittelzufuhrvorrichtung nach einem oder mehreren der vorherigen Ansprüche, **dadurch gekennzeichnet, daß** der Kraftspeicher (196), gegebenenfalls mittels Hebeln, derart auf den oberen Armabschnitt (130) wirkt, daß mit abnehmendem Durchmesser der Hüllmittelrolle (122) die Druckkraft zunimmt.

8. Hüllmittelzufuhrvorrichtung nach einem oder mehreren der vorherigen Ansprüche, **dadurch gekennzeichnet, daß** der untere Armabschnitt (128) mittels eines Tragteils (146) gegen eine Abwärtsbewegung gehalten wird, wenn er seine Ladestellung eingenommen hat, in der sich seine Enden im wesentlichen auf der gleichen Höhe befinden.

9. Hüllmittelzufuhrvorrichtung nach einem oder mehreren der vorherigen Ansprüche, **dadurch gekennzeichnet, daß** der untere Armabschnitt (128) in der Art einer Mulde ausgebildet, jedenfalls mit einer Vertiefung, versehen ist.

10. Hüllmittelzufuhrvorrichtung nach einem oder mehreren der vorherigen Ansprüche, **dadurch gekennzeichnet, daß** der untere Armabschnitt ein Segment (142) aufweist, das flach ausgebildet ist und an dem eine an dem oberen Armabschnitt (130) drehbar gelagerte Druckrolle (174) in der Betriebsstellung beider Armabschnitte (128, 130) zur Anlage bringbar ist.

11. Hüllmittelzufuhrvorrichtung nach einem oder mehreren der vorherigen Ansprüche, **dadurch gekennzeichnet, daß** die Druckrolle (150) und die Anschlagrolle (156) an einem Halter (154) drehbar gelagert sind, der an dem unteren Armabschnitt (128) schwenkbar aufgenommen ist.

12. Hüllmittelzufuhrvorrichtung nach einem oder mehreren der vorherigen Ansprüche, **dadurch gekennzeichnet, daß** die Hüllmittelrolle (122) an einer Stelle auf der oberen Hüllmittelzufuhrrolle (82) aufsitzt, die im wesentlichen diametral gegenüber der Stelle liegt, an der die Druckrolle (150) und gegebenenfalls die Anschlagrolle (156) an der Hüllmittelrolle (122) anliegen.

## Claims

1. A wrapping material supply device (70) for receiving a wrapping material roll (122), with a pressure arm assembly (126) and a friction surface, between which the wrapping material roll (122) is disposed during operation, **characterized in that** the pressure arm assembly (126) comprises lower and upper arm sections (128 and 130) which act together on the wrapping material roll (122) in an operating position and can be brought in an out of operation position into positions separated from one another, in which they have a spacing from one another which at least allows passage of the wrapping material roll (122).

2. A wrapping material supply device according to claim 1, **characterized in that** the lower arm section (128) and the upper arm section are pivotally fitted respectively below and above the wrapping material roll (122).

3. A wrapping material supply device according to claim 1 or 2, **characterized in that** the lower and upper arm sections (128, 130) overlap in the operating position and the lower arm section (128) bears on the wrapping material roll (122), preferably by means of a pressure roller (150).

4. A wrapping material supply device according to one or more of the preceding claims, **characterized in that** the force required for exerting pressure on the wrapping material roll (122) is applied to the upper arm section and the force is supplied by a force store (196) which also serves to position a casing (186) of the wrapping material supply device (70).

5. A wrapping material supply device according to one or more of the preceding claims, **characterized in that** the lower arm section (128) comprises a pressure roller (150) and a stop roller (156) which have a radial spacing from one another, in which part of the peripheral arc of the wrapping material roll can be received.

6. A wrapping material supply device according to one or more of the preceding claims, **characterized in that** the wrapping material (124) can be drawn off the wrapping material roll (122) by means of two oppositely rotatable wrapping material supply rollers (82, 84) and one of the wrapping material supply rollers (82), especially an upper one, represents the friction surface against which the wrapping material roll (122) can be brought into abutment.

7. A wrapping material supply device according to one or more of the preceding claims, **characterized in that** the force store (196) so acts, optionally by means of levers, on the upper arm section (130) that the pressing force increases with falling diameter of the wrapping material roll (122).

8. A wrapping material supply device according to one or more of the preceding claims, **characterized in that** the lower arm section (128) is restrained against downwards movement by means of a support part (146) when it has assumed its loading position in which its ends are located substantially at the same height.

9. A wrapping material supply device according to one or more of the preceding claims, **characterized in that** the lower arm section (128) is in the form of a trough and is in any case provided with a depression.

10. A wrapping material supply device according to one or more of the preceding claims, **characterized in that** the lower arm section comprises a segment (142) which is of flat form and on which a pressure roller (174) mounted rotatably on the upper arm section (130) can be brought into abutment in the operating position of the two arm sections (128, 130).

11. A wrapping material supply device according to one or more of the preceding claims, **characterized in that** the pressure roller (150) and the stop roller (156) are rotatably mounted on a bracket (154) which is pivotally received on the lower arm section (128).

12. A wrapping material supply device according to one or more of the preceding claims, **characterized in that** the wrapping material roll (122) sits at one place on the upper wrapping material supply roller (82) which is substantially diametrically opposite the place at which the pressure roller (150) and optionally the stop roller (156) bear on the wrapping material roll (122).

## Revendications

1. Dispositif d'alimentation en gaine d'enrubannage (70), destiné à la réception d'un rouleau de gaine (122), comportant un ensemble de bras de pression (126) et une surface de friction, entre lesquels est disposé le rouleau de gaine (122) en cours de fonctionnement, **caractérisé en ce que** l'ensemble de bras de pression (126) comprend une portion de bras inférieure et une portion de bras supérieure (128, 130) qui, en position de fonctionnement, agissent ensemble sur le rouleau de gaine (122), et peuvent être amenées dans une position de non-fonctionnement dans des positions séparées l'une de l'autre dans lesquelles elles présentent entre elles une certaine distance permettant au moins le passage du rouleau de gaine (122).

2. Dispositif d'alimentation en gaine selon la revendication 1, **caractérisé en ce que** la portion de bras inférieure (128) et la portion de bras supérieure (130) sont disposés de façon pivotante respectivement sous et sur le rouleau de gaine (122).

3. Dispositif d'alimentation en gaine selon l'une des revendications 1 ou 2, **caractérisé en ce que**, dans la position de fonctionnement, les portions inférieure et supérieure (128, 130) sont superposées, et la portion inférieure de bras (128) repose sur le rouleau de gaine (122), de préférence par l'intermédiaire d'un cylindre de pression (150).

4. Dispositif d'alimentation en gaine selon l'une ou plusieurs des revendications précédentes, **caractérisé en ce que**, en vue d'exercer une pression sur le rouleau de gaine (122), la force nécessaire est exercée sur la portion de bras supérieure, la force étant fournie par un accumulateur de force (196) servant également au réglage d'un capotage (186) du dispositif d'alimentation en gaine (70).

5. Dispositif d'alimentation en gaine selon l'une ou plusieurs des revendications précédentes, **caractérisé en ce que** la portion inférieure de bras (128) comprend un cylindre de pression (150) et un cylindre de butée (156) qui présentent entre eux un espace radial dans lequel une partie de l'arrondi périphérique du rouleau de gaine peut être logée.

6. Dispositif d'alimentation en gaine selon l'une ou plusieurs des revendications précédentes, **caractérisé en ce que** la gaine (124) peut être extraite du rouleau de gaine (122) au moyen de deux cylindres d'alimentation en gaine (82, 84) rotatifs en sens contraire et l'un des cylindres d'alimentation en gaine (82), en particulier le cylindre supérieur, présente la surface de friction contre laquelle peut être amené à reposer le rouleau de gaine (122).

7. Dispositif d'alimentation en gaine selon l'une ou plusieurs des revendications précédentes, **caractérisé en ce que** l'accumulateur de force (196) agit éventuellement par l'intermédiaire de leviers sur la portion de bras supérieure (130) de manière à augmenter la force de pression avec la diminution du diamètre du rouleau de gaine (122).

8. Dispositif d'alimentation en gaine selon l'une ou plusieurs des revendications précédentes, **caractérisé en ce que** la portion de bras inférieure (128) est retenue contre un déplacement vers le bas au moyen d'un élément porteur (146) lorsqu'il occupe sa position de charge dans laquelle ses extrémités se trouvent pratiquement à la même hauteur.

9. Dispositif d'alimentation en gaine selon l'une ou plusieurs des revendications précédentes, **caractérisé en ce que** la portion de bras inférieure (128) est du type cuvette ou comportant au moins un creux.

10. Dispositif d'alimentation en gaine selon l'une ou plusieurs des revendications précédentes, **caractérisé en ce que** la portion de bras inférieure présente un segment (142) de forme aplatie et sur lequel, un cylindre de pression (174) monté rotatif sur la portion de bras supérieure (130), peut être amené à reposer dans la position de fonctionnement des deux portions de bras (128, 130).

11. Dispositif d'alimentation en gaine selon l'une ou plusieurs des revendications précédentes, **caractérisé en ce que** le cylindre de pression (150) et le cylindre de butée (156) sont montés rotatifs sur une pièce de maintien (154) qui est reçue basculable sur la portion de bras inférieure (128).

12. Dispositif d'alimentation en gaine selon l'une ou plusieurs des revendications précédentes, **caractérisé en ce que** le rouleau de gaine (122) repose sur le cylindre d'alimentation en gaine (82) en un emplacement qui est pratiquement diamétralement opposé à l'emplacement sur lequel repose le cylindre de pression (150) et, le cas échéant, le rouleau de gaine (122).
